# EUROPEAN PATENT APPLICATION

(11) **EP 3 188 573 A1**
(43) Date of publication of application: **05.07.2017**
(21) Application number: 15460138.9
(22) Date of filing: 29.12.2015
(51) Int. Cl.: H05B 37/02

(54) **A SYSTEM AND METHOD OF CONTROLLING ELECTRIC POWER SUPPLY IN A ROOM OF A TEMPORARY USE**

(71) Applicant: "STABIL" PIOTR NARCZYK, 96-321 Zabia Wola (PL)
(72) Inventor: Guzowski, Maciej, 02-390 Warszawa (PL); Narczyk, Piotr, 96-321 Zabia Wola (PL)
(74) Representative: Palka, Grazyna

(57) **Abstract**

The invention relates to a system of controlling electric power supply in a room of temporary use, which comprises an electric device to turn on the power supply of the room connected to a controller, to which at least one door sensor is connected. At least one motion sensor (C) that monitors the movement in the room and a transponder reader (D) to verify the transponder electronic key is connected to the controller (E) comprising a timer.

The invention relates also to a method of controlling electric power supply in the room of temporary use, wherein the controller monitors at least one door sensor and at least one timer is used. Additionally the method includes at least one of the following steps: the electric device (A) turning on the power supply in the room is controlled by the controller (E), and/or the status of at least one door sensor (B) indicating whether the door is open or closed is monitored, and the resulting indications are transmitted to the controller (E), and/or the status of at least one motion sensor (C) indicating movement in the room is monitored, and the resulting indications of movement in the room are transmitted to the controller (E), and/or the status of at least one transponder reader (D) is monitored and/or additionally at least one timer, counting down the set time is used and/or the alarm is activated.

## Description

The object of the invention is a system and method of controlling electric power supply without the use of a manually activated device, in a room of temporary use, in particular in hotel rooms, dependent on the presence of people therein, at the same time enabling verification/authorization of people staying in the rooms.

For switching on a power supply in a temporary access rooms, for examples hotel rooms, a card "slot" is widely used, that is a device installed usually at the room doors, to which a guest inserts his card (usually this is an electronic key to a door lock) after entering into the room, to cause switching on the power supply of electrically powered devices, including sockets.

Document US2010276482A1 discloses a system for reducing energy consumption in an unoccupied room wherein a card reader, powered from battery and located in the room, comprises an input card switch adapted to be activated after inserting a card and deactivated after its removal. The reader has also a controller and a transmitter, and is configured to transfer, after insertion of a card, the output signal with periodic status signal indicating the activation status of the card switch. In this solution, at least one unit comprising the means for disconnecting the power source, the means for disconnecting the room devices, transceiver controller are designed to make sure that energy-saving mode is activated in an unoccupied room.

Application US4315596A discloses a solution providing a system for reducing unproductive energy consumption of devices, designed primarily for use while a person or object is present in the area of operation. The system ensures that the equipment operates only when a person or object is present in the area of operation, and for a short period of time immediately after leaving the area of operation. The system comprises the elements detecting the presence of people (a door sensor and a pressure sensor in the floor) or objects in the working area, among others by controlling the activity of the door and door bolt, and delay means providing, for a short period of time, a delay signal in response to the loss of the signal of presence of people or objects.

Application US4058740A discloses an electrical system for controlling the production of energy within a closed space, such as in a motel room, comprising a door switch controlled by opening and closing the door, and a bolt switch controlled by the action of the door bolt. The system may monitor several kinds of electric devices such as a heating device and air conditioning, lighting device and electrical outlets in the room.

Prior art uses two types of card slots: simple, operated by the mechanically activated terminal, closed by a card inserted into a slot of proper size of any type, also e.g. a credit card, as well as "smart" slots recognizing the type of inserted card and turning on the power supply only when a card of a proper type is inserted into a slot, usually a card which is also a key to the electronic lock of the room. Before the last resident person leaves the room, the card should be removed from the slot, which turns off the power supply in the room. This solution enables turning on the power supply of the room only when people who use electric appliances. This reduces energy costs and prevents leaving electric appliances in the empty room unattended. However, using a card slot for turning on the power supply causes the following problems:
1. It is necessary to use in the installation a special device - a card slot -and to perform a cabling for this device,
2. A card slot does not allow to tell for sure if there are any people in the room and only then turn on the power supply but turns on the power supply and keeps it turned on whenever the card is in the slot, even if the room is unoccupied, but the card is still in the slot - left there consciously or by mistake by the people leaving this room. If the card is not removed from the slot by the last person leaving the room, the power supply is not turned off and the receivers connected to the power supply (lamps, electronics, computer and telephone power supplies, irons, kettles, coffee makers) continue to consume electricity pointlessly. Moreover, some devices that are not turned off and left unattended can cause a fire.
3. It is necessary to use a card, which is easy only when a card electronic lock is used to open the room. In the case of any other form of electronic keys (wristbands, "watches", chips) or mechanical locks, it requires the use of a different method.

A system and method of controlling electric power supply in the room of temporary use according to the invention solve the above problems, because a card slot is not necessary and to turn on the power supply in the room of temporary use in which people are present other devices, generally used in automation systems, are used.

A system and method according to the invention solve the problem of turning on the power supply in the automation system designed for the rooms of temporary use, for example hotel rooms, so as to make this turning on independent from applying a special device used for his purpose.

The object of the invention is a system of controlling electric power supply in a room of temporary use, comprising an electric device, to turn on the power supply of the room connected to a controller, to which at least one door sensor is connected, which is characterized in that at least one motion sensor that monitors the movement in the room and at least one transponder reader to verify the transponder electronic key is connected to the controller comprising a timer.

Preferably, an alarm switch to indicate exceedance of a predetermined time on a timer to measure the time of opening the door with a verified absence of movement in the room and/or unauthorized presence in the room is additionally connected to the controller.

Preferably, data transmission from the door sensors and motion sensors and transponder reader is wired or wireless.

Preferably, the electric device turning on the power supply in the room is a relay, contactor and/or triac.

Preferably, the door sensor is an element of an electric bolt and/or a separate device, preferably a reed relay.

Preferably, positively verified electronic key unlocks the door lock electrically controlled by an electric strike and/or electromagnetic jumper.

Preferably, at least one timer measures the following time intervals that are:
- needed to stabilize at least one motion sensor; and/or;
- designed to detect movement in the room where a person/people inside remain motionless or outside the range of at least one motion sensor; and/or
- needed to avoid incorrect activation of at least one motion sensor caused by closing the door; and/or
- needed for a person/people to enter or leave the room;
- designed to detect movement in the room with the door open.

The object of the invention is also a method of controlling electric power supply in the room of temporary use, wherein the controller monitors at least one door sensor and at least one timer is used, characterized in that it includes at least one of the following steps:
- the electric device turning on the power supply in the room is controlled by the controller, and/or
- the status of at least one door sensor indicating whether the door is open or closed is monitored, and the resulting indications are transmitted to the controller, and/or
- the status of at least one motion sensor indicating movement in the room is monitored, and the resulting indications of movement in the room are transmitted to the controller, and/or
- the status of at least one transponder reader indicating an authorized or unauthorized opening of the door is monitored and/or additionally
- at least one timer, counting down the set time is used, and/or
- the alarm is activated.

Preferably, after receiving the uploaded indications of the door status, at least one of the steps is performed by the controller:
- monitoring of at least one door sensor is turned off when the door is open; and/or
- at least one timer is turned on and when the time expires monitoring of at least one door sensor is turned on, and/or
- monitoring of at least one motion sensor is turned on after detecting that the door is closed; and/or
- at least one timer and at least one motion sensor is turned on after detecting that the door is closed, and/or
- the alarm is activated.

Preferably, after receiving the uploaded indications from the motion sensor at least one of the steps is performed by the controller:
- monitoring of at least one motion sensor turns off and monitoring of at least one door sensor turns on after detecting the movement; and/or
- monitoring of at least one motion sensor turns off and the power supply turns off after no movement is detected; and/or
- the alarm is activated.

Preferably, after receiving the indication from the transponder reader at least one of the steps is performed by the controller:
- the room power is turned on; or/and
- monitoring of at least one motion sensor is turned off; and/or
- monitoring of at least one door sensor is turned on; and/or
- the alarm is activated.

Preferably, at least one timer measures the time intervals:
- needed to stabilize at least one motion sensor; and/or
- designed to detect movement in the room where a person/people inside remain motionless or outside the range of at least one motion sensor; and/or
- needed to avoid incorrect activation of at least one motion sensor caused by closing the door; and/or
- needed for a person/people entering or leaving the room;
- designed to detect movement in the room with the door open.

The object of the invention is shown in the drawing, in which: fig. 1 shows a block diagram of the electric power supply control system, fig. 2 - a diagram of the steps of the method of controlling electric power supply, fig. 3- simplified diagram of the steps of the method of controlling electric power supply.

The object of the invention is illustrated by the following embodiments.

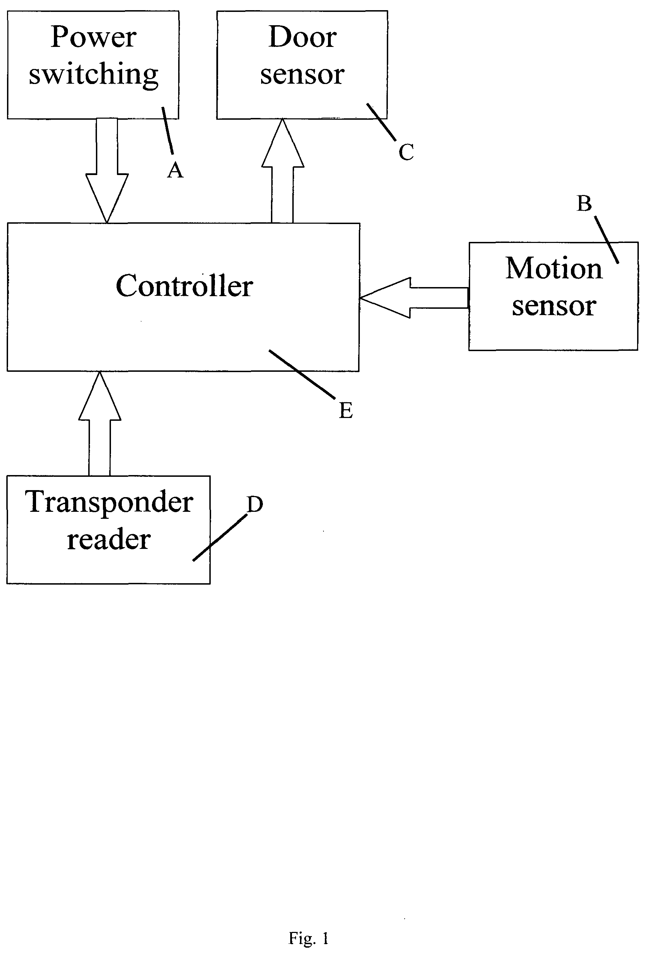

A system of controlling electric power supply of fig. 1 comprises an electric device A to turn on the power supply of the room, connected to a controller E, to which at least one door sensor B is connected. Additionally, a motion sensor C that monitors the movement in the room and a transponder reader D to verify transponder electronic key is connected to the controller E comprising a timer.

An electric device A turns on the power supply of a room or a group of rooms, with access control, that is, that can be entered by a door open with electronic locks and are provided with a door sensor B (there may be few, in which case each must be equipped like that). In the embodiments such an electric device A can be a relay, contactor or triac with a load capacity suitable for the estimated maximum power required by the electric appliances that can work in the room.

A door sensor B is a device telling whether the door is open or closed, through opening or closing the terminals installed in this device and activated following an opening/closing of the door. Information about this closing or opening is transmitted to a controller E, usually by wire, but can also be transmitted wirelessly. A door sensor B is usually a part of an electric bolt being a part of an electric lock but may also be a separate device, for example a reed relay, whose terminals are closed by the action of the magnet installed on the movable door wing.

A motion sensor C is a device detecting the movement of the objects inside the room. Motion detection results in opening or closing the terminals installed in this device. Information about this closing or opening is transmitted to the controller E, usually by wire, but can be transmitted wirelessly.

A transponder reader D is a device that reads the data on the transponder (on the electronic key). This data is transmitted to the controller E, usually by wire, but can also be transmitted wirelessly. On the basis of the received data the controller E decides to grant or not to grant the access to a person using a transponder. Granting access usually means activating a proper lock (unlocking the bolt) electrically controlled, in other words an electric strike, electromagnetic jumper etc.

The controller E is a programmable device that receives information transmitted by the reader D and sensors B, C described above as well as:
a) activates the electric bolt by closing the terminals of the relay embedded in the controller E or the external one, when the transponder read by the reader D lists data that grant access to the room to a person using this transponder;
b) turns on electric power supply in the room by closing the terminals of the relay embedded in the controller E or the external one, when the status of the sensors B, C or a sequence of events indicates that people are staying in the room and power should be turned on.

The system according to the invention, and more specifically the controller E comprises timers. In one embodiment the system operates on five timers.

A timer T1 measures the time it takes for the motion sensor C to enter a stable working mode, because usually such a sensor, turning on its power, needs a few/several tens of seconds to enter a stable working mode, that is standby mode.

A timer T2 measures the time needed to detect any potential movement in the room when people inside were at a standstill or outside of the motion sensor C.

A timer T3 measures the time needed to avoid "false" activation of the motion sensor C caused by closing the door.

A timer T4 measures the time needed for the person/people to enter/leave the room.

A timer T5 measures the time for detecting the movement in the room with the door open.

Summing up, the system according to the invention uses a door opening sensor B and a motion sensor C and controller E which, based on events detected by the sensors B, C and their appropriate sequence, activates the relay turning on the power supply in the room after a first person enters the room, keeps the power on when people are inside, and turns off the power supply when the last person leaves the room.

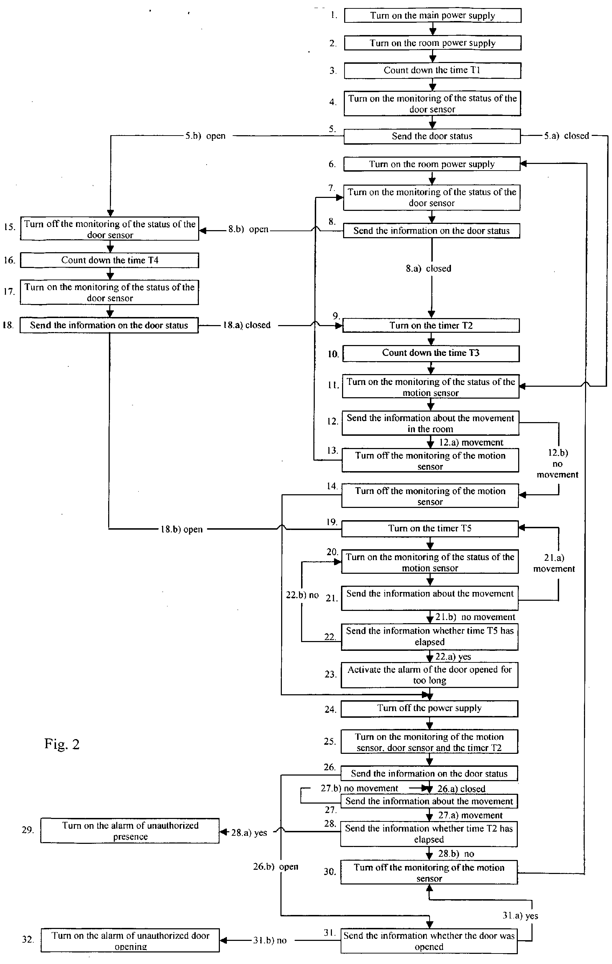

Fig. 2 shows a method of controlling electric power supply in the room of temporary use, in an embodiment, in which individual steps can be summarized as follows:
1. **Turning on** the main power supply (of the entire facility which the room is a part of);
2. Turning on the power supply of the room by the controller E using a device A (so that after main power supply blackout, e.g. due to an accident, and restoration of this power supply, the power supply turn on, because in this situation it is not known yet if any people are in the room while restoring the main power supply);
3. Counting down by timer T1, the time it takes for the motion sensor C to enter a stable working mode, because usually such a sensor, after turning on its power, needs a few/several tens of seconds to enter a stable working mode, that is standby mode (example value is 30 s);
4. Turning on the monitoring of the status of the door sensor B by the controller E;
5. Sending the door status by the door sensor B
   5.a) if the door in section 5. is closed:
      going to the activities described in section 11;
   5.b) if the door in section 5. is open:
      going to the activities described in section 15;
6. **Turning on** the power supply of the room by the controller E, using a device A;
7. Turning on the monitoring of the status of the door sensor B by the controller E;
8. Sending the information on the door status by the door sensor B;
   8.a) if closed:
9. Turning on the timer T2, which is the time needed to detect any movement in the room in case, when people inside were remaining still or outside of the motion sensor C (an example value of the measured time is 15 min);
10. Counting down the time T3 by the timer T3, which is the time needed to avoid "false" activation of the motion sensor C caused by closing of the door (an example value of the measured time is 15 s);
11. Turning on the monitoring of the status of the motion sensor C by the controller E;
12. Sending the information about the movement in the room by the motion sensor C;
   12.a) in case of movement:
13. Turning off the monitoring of the motion sensor C by the controller E, going to the activities described in section 7;
   12.b) in case of no movement:
14. Turning off the monitoring of the motion sensor C by the controller E, going to the activities described in section 24;
   8.b) if open:
15. Turning off the monitoring of the status of the door sensor B by the controller E;
16. Counting down the time T4 by the timer T4, which is the time needed for the person/people to enter or leave the room (an example value of the measured time is 30 s);
17. Turning on the monitoring of the status of the door sensor B by the controller E;
18. Sending the information on the door status by the door sensor B:
   18.a) if closed:
      going to the activities described in section 9;
   18.b) if open:
19. Turning on the timer T5 which is intended for detecting the movement in the room with the door open (an example value of the measured time is 3 min);
20. Turning on the monitoring of the status of the motion sensor C by the controller E;
21. Sending the information about the movement status in the room by the motion sensor C;
   21.a) in case of movement:
      going to the activities described in section 19 (which means that the power supply of the room stays on when a person is staying in the room, e. g. cleaning the room with the door open);
   21.b) in case of no movement:
22. Sending, by the timer T5, the information whether time T5 has elapsed;
   22.a) if yes:
23. Activating the alarm of the door opened for too long, going to the activities described in section 24;
   22.b) if no:
      going to the activities described in section 20;
24. **Turning off** the power supply of the room by the controller E using a device A;
25. Turning on the monitoring of the motion sensor C, door sensor B and timer T2 by the controller E;
26. Sending the information on the door status by the door sensor B;
   26.a) if closed:
27. Sending the information about the movement in the room by the motion sensor C;
   27.a) in case of movement:
28. Sending, by the timer T2, the information whether time T2 has elapsed;
   28.a) if yes:
29. Turning on the alarm of unauthorized presence by the controller E;
   28.b) if no:
30. Turning off the monitoring of the motion sensor C by the controller E, going to the activities described in section 6 and following;
   27.b) in case of no movement:
      going to the activities described in section 27;
   26.b) if open
31. Sending the information, by the reader D, whether the door was opened using the reader D:
   31.a) if yes:
      turning off the monitoring of the motion sensor C by the controller E described in section 30,
      going to the activities described in section 6 and following;
   31.b) if no:
32. Turning on the alarm of unauthorized door opening (so called forced entry alarm) by the controller E.

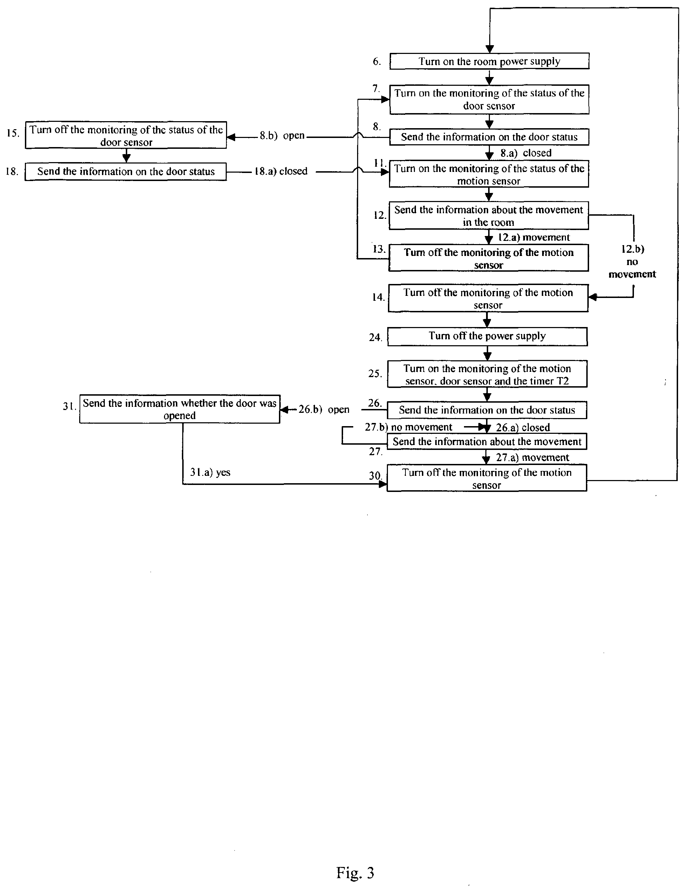

Fig. 3 shows the main (frame) steps of the method according to the invention in the embodiment (for uniformity the same numbers as in fig. 2 were used):
6. **Turning on** the power supply of the room by the controller E, using a device A.
7. Turning on the monitoring of the status of the door sensor B by the controller E;
8. Sending the information on the door status by the door sensor B
   8.a) if closed:
      11. Turning on the monitoring of the status of the motion sensor C by the controller E;
      12. Sending the information about the movement in the room by the motion sensor C;
         12.a) in case of movement:
      13. Turning off the monitoring of the motion sensor C by the controller E, going to the activities described in section 7;
         12.b) in case of no movement:
      14. Turning off the monitoring of the motion sensor C by the controller E, going to the activities described in section 24;
   8.b) if open:
      15. Turning off the monitoring of the status of the door sensor B by the controller E and going to section 18;
18. Sending the information on the door status by the door sensor B;
   18.a) if closed:
   going to the activities described in section 11;
24. **Turning off** the power supply of the room by the controller E using a device A;
25. Turning on the monitoring of the status of the motion sensor C, door sensor B and timer T2 by the controller E;
26. Sending the information on the door status by the door sensor B;
   26.a) if closed:
27. Sending, by the motion sensor C, the information on the status of movement in the room;
   27.a) in case of movement:
30. Turning off the monitoring of the motion sensor C by the controller E, going to the activities described in section B and following;
   26.b) if open:
31. Sending, by the reader D, the information whether the door was opened using the reader D;
33.a) if yes:
   turning off the monitoring of the motion sensor C by the controller E described in section 30,
   going to the activities described in section 6 and following;

In the embodiments relating to the method and system when the main power supply is turned on the power supply of the room turns on automatically. This is necessary to ensure that after the main power blackout and restoration (e.g. result of failure) the power supply in the room is turned on and the light in the room turned on (for there is no information yet after the main power restoration if the person (guest) is still in the room or not). The second reason is that the used motion sensor C requires approx. 20 seconds to enter a stable working mode (standby). After this period, the procedure of verifying the presence of a guest in the room starts. When the door is closed activation of the motion sensor C causes permanent activation of the room power supply. Re-verification of the presence occurs when the door is closed again.

In the embodiments relating to a method and system, upon the guest leaving the room (opening and closing of the door), the timer counts 15 s (the time required to avoid "false" activation caused by closing the door). After this time the procedure of verifying the presence starts again. If after 15 s a motion sensor does not activate then the power supply in the room turns off. It may happen that when the room is occupied by more than one guest, after one of them leaves the other one stays in the room and does not move for some time (e.g. is sleeping or is in the bathroom). The power supply in the room will also be turned off but detection of any kind of movement will turn it on again.

When the door remains open, after two minutes power is turned off, unless the motion sensor C is activated earlier, which causes an extension of an activation state of the room for a further two minutes. That way, if a person cleaning the room with the door open is staying inside, every movement detected by the motion sensor C causes the extension of the activation state of the room for a further two minutes.

Other possible embodiments of the system and method include:
- connecting the door sensor B and motion sensor C with a minicontroller (specially made or universal), and implementing the described method in its software;
- implementing the described method in the software of the automation controller, supporting controlling the access to the room; wherein sensors are already connected to this controller E: an open door sensor B and motion sensor C. If the access zone supported by the controller covers more than one room, motion sensors C from each room should be connected to the controller E.

In a further embodiment of the method and system a unique system of data transmission via electrical cables is used, therefore automation devices used can be placed virtually anywhere with 230VAC supply voltage. Control modules can be placed in concealed mounting boxes of outlets and switches, and lamp enclosures (or other electrically controlled devices). This is particularly important for existing buildings, for which performing a dedicated cabling is virtually impossible (e.g. historic buildings). But also the use of this innovative technology in new buildings, particularly those big ones, can be very beneficial. Rather than incurring significant costs associated with dedicated cables, the ones that need to be run anyway can be used - for example, electric cables.

Referred embodiments are presented here only as non-limiting references relating to a method and system and cannot in any way limit the scope of protection that is defined by the claims.

## Claims

1. A system of controlling electric power supply in a room of temporary use, comprising an electric device, to turn on the power supply of the room connected to a controller, to which at least one door sensor is connected, **characterized in that** at least one motion sensor (C) that monitors the movement in the room and at least one transponder reader (D) to verify the transponder electronic key is connected to the controller (E) comprising a timer.

2. The system according to claim 1, **characterized in that** an alarm switch to indicate exceedance of a predetermined time on a timer to measure the time of opening the door with a verified absence of movement in the room and/or unauthorized presence in the room is additionally connected to the controller (E).

3. The system according to claim 1 or 2, **characterized in that** data transmission from the door sensors (B) and motion sensors (C) and transponder reader (D) is wired or wireless.

4. The system according to any one of the preceding claims, **characterized in that** the electric device (A) turning on the power supply in the room is a relay, contactor and/or triac.

5. The system according to any one of the preceding claims, **characterized in that** the door sensor (B) is an element of an electric bolt and/or a separate device, preferably a reed relay.

6. The system according to any one of the preceding claims, **characterized in that** positively verified electronic key unlocks the door lock electrically controlled by an electric strike and/or electromagnetic jumper.

7. The system according to any one of the preceding claims, **characterized in that** at least one timer measures the following time intervals that are:
- needed to stabilize at least one motion sensor (C); and/or
- designed to detect movement in the room where a person/people inside remain motionless or outside the range of at least one motion sensor (C); and/or
- needed to avoid incorrect activation of at least one motion sensor (C) caused by closing the door; and/or
- needed for a person/people to enter or leave the room;
- designed to detect movement in the room with the door open.

8. A method of controlling electric power supply in the room of temporary use, wherein the controller monitors at least one door sensor and at least one timer is used, **characterized in that** it includes at least one of the following steps:
- the electric device (A) turning on the power supply in the room is controlled by the controller (E), and/or
- the status of at least one door sensor (B) indicating whether the door is open or closed is monitored, and the resulting indications are transmitted to the controller (E), and/or
- the status of at least one motion sensor (C) indicating movement in the room is monitored, and the resulting indications of movement in the room are transmitted to the controller (E), and/or
- the status of at least one transponder reader (D) indicating an authorized or unauthorized opening of the door is monitored and/or additionally
- at least one timer, counting down the set time is used, and/or
- the alarm is activated.

9. The method according to claim 8, **characterized in that** after receiving the uploaded indications of the door status at least one of the steps is performed by the controller (E):
- monitoring of at least one door sensor (B) is turned off when the door is open; and/or
- at least one timer is turned on and when the time expires monitoring of at least one door sensor (B) is turned on, and/or
- monitoring of at least one motion sensor (C) is turned on after detecting that the door is closed; and/or
- at least one timer and at least one motion sensor (C) is turned on after detecting that the door is closed, and/or
- the alarm is activated.

10. The method according to claim 8 or 9, **characterized in that** after receiving the uploaded indications from the motion sensor (C) at least one of the steps is performed by the controller (E):
- monitoring of at least one motion sensor (C) turns off and monitoring of at least one door sensor (B) turns on after detecting the movement; and/or
- monitoring of at least one motion sensor (C) turns off and the power supply turns off after no movement is detected; and/or
- the alarm is activated.

11. The method according to any one of the claims 8 - 10, **characterized in that** after receiving the indication from the transponder reader (D) at least one of the steps is performed by the controller (E):
- the room power is turned on; or/and
- monitoring of at least one motion sensor (C) is turned off; and/or
- monitoring of at least one door sensor (B) is turned on; and/or
- the alarm is activated.

12. The method according to any one of the claims 8 - 11, **characterized in that** at least one timer measures the time intervals:
- needed to stabilize at least one motion sensor (C); and/or
- designed to detect movement in the room where a person/people inside remain motionless or outside the range of at least one motion sensor (C); and/or
- needed to avoid incorrect activation of at least one motion sensor (C) caused by closing the door; and/or
- needed for a person/people entering or leaving the room;
- designed to detect movement in the room with the door open.
